Europäisches Patentamt

European Patent Office

Office européen des brevets

(19)

(11) **EP 0 741 860 B1**

(12) **EUROPÄISCHE PATENTSCHRIFT**

(45) Veröffentlichungstag und Bekanntmachung des
Hinweises auf die Patenterteilung:
**02.12.1998  Patentblatt 1998/49**

(21) Anmeldenummer: **95906345.4**

(22) Anmeldetag: **25.01.1995**

(51) Int Cl.⁶: **G01K 7/01**, G01F 1/68

(86) Internationale Anmeldenummer:
**PCT/EP95/00250**

(87) Internationale Veröffentlichungsnummer:
**WO 95/20751 (03.08.1995 Gazette 1995/33)**

(54) **TEMPERATURSENSOR**

TEMPERATURE SENSOR

CAPTEUR DE TEMPERATURE

(84) Benannte Vertragsstaaten:
**AT CH DE LI**

(30) Priorität: **26.01.1994  DE 4402249**

(43) Veröffentlichungstag der Anmeldung:
**13.11.1996  Patentblatt 1996/46**

(73) Patentinhaber: **Ahlers, Horst**
**07743 Jena (DE)**

(72) Erfinder: **Ahlers, Horst**
**07743 Jena (DE)**

(74) Vertreter: **Schlenk, Manfred, Dipl.-Ing. et al**
**Willibaldstrasse 132**
**80689 München (DE)**

(56) Entgegenhaltungen:
FR-A- 2 656 093          US-A- 4 980 847
US-A- 5 032 879          US-A- 5 281 829

**Beschreibung**

Die Erfindung betrifft einen Temperatursensor mit wenigstens zwei, für die zu bestimmende Temperatur charakteristische elektrische Werte liefernden Halbleiterdioden, die als pn-Übergänge in einem Halbleitersubstrat ausgebildet sind.

Sensoren dieser Art sind beispielsweise durch das Buch "Mikroelektronische Sensoren" Ahlers - Waldmann, Huetig-Verlag, 1989, insbesondere die Seiten 90 bis 92 bekannt. Sie werden meist mit Strom- oder Spannungs-Einprägung betrieben und können auch als sogenannte LED ausgebildet sein. Auch ist es aus der Literaturstelle bekannt, den Diodensensor in Form von pn-Übergängen in einem Halbleitersubstrat auszubilden.

Desweiteren ist durch die US-Patentschrift 4 980 847 eine Meßanordnung zur Bestimmung der Umgebungstemperatur unter Verwendung eines photoelektrischen Halbleiter-Umwandlers bekannt, bei dem die Temperaturabhängigkeit der photoelektrischen Konversion mit der Wellenlänge der Spektralkomponente des von einer getrennten Lichtquelle dem Umwandler zugeführten Lichts ausgenutzt wird. Aus der Technik der optischen Übertragung von Informationen ist es ferner durch die US-PS 5 281 829 bekannt, einer als Lichtquelle dienenden Halbleiter-Laserdiode eine Halbleiter-Photodiode beizuordnen, um mit deren Hilfe die Laserstrahlung phasen- und frequenzkonstant zu halten. Die beiden Dioden sind zu diesem Zweck in einem gemeinsamen Halbleitersubstrat angeordnet, jedoch durch einen Graben elektrisch voneinander getrennt. Die optische Kopplung beider Dioden erfolgt durch die von der Laserdiode über den Graben auf die Photodiode auftreffende Lichtstrahlung. Mittels einer von der Photodiode abgeleiteten elektrischen Größe wird dann - in nicht näher beschriebenen Weise - die Laserdiode nachgeregelt. Ein ähnliches Prinzip findet sich auch in der Französischen Patentpublikation 2 656 093, in der eine Temperaturregelung für die Lichtquelle eines Lasergyroskops beschrieben wird. Hierbei werden eine Halbleiter-Lichtquelle und ein temperaturempfindliches Halbleiterteil, wie eine Halbleiterdiode in einem gemeinsamen Substrat angeordnet. Dadurch sollen sich die beiden Dioden praktisch auf der gleichen Betriebstemperatur befinden. Die an dem temperaturempfindlichen Halbleiterteil abnehmbare elektrische Größe dient dann als Regelgröße für eine die Laserdiode auf konstanter Betriebstemperatur haltende Regelschaltung. Die Vereinigung einer Laserdiode und einer Photodiode in einem Halbleitersubstrat ist ferner für die gleichen Zwecke durch die US-PS 5 032 879 bekannt. Es handelt sich somit durchwegs um Einrichtungen, die mit einem Temperatursensor der einleitend angegebenen Art nicht unmittelbar vergleichbar sind.

Der Erfindung liegt die Aufgabe zugrunde, einen Temperatursensor der einleitend angegebenen Art hinsichtlich seiner Einsatzfähigkeit weiterzubilden und zu verbessern.

Ausgehend von einem Temperatursensor mit wenigstens zwei, für die zu bestimmende Temperatur charakteristische elektrische Werte liefernden Halbleiterdioden, die als pn-Übergänge in einem Halbleitersubstrat ausgebildet sind, wird dies nach der Erfindung durch eine Ausbildung mit der Gesamtheit folgender Merkmale erreicht. Wenigstens eine der Halbleiterdioden ist als lumineszierende oder lasernde Halbleiterdiode ausgebildet. Die Halbleiterdioden in dem Halbleitersubstrat sind durch grabenförmige Vertiefungen elektrisch und geometrisch voneinander getrennt. Die Halbleiterdioden sind in dem Halbleitersubstrat so angeordnet, daß sich ihre raumgeometrischen Kantenstrahlungscharakteristiken wenigstens teilweise überlappen. Die lumineszierende oder lasernde Halbleiterdiode ist mit ihrer Strahlung zur Kennlinieneinstellung der mit ihr über die Kantenstrahlung verkoppelten Halbleiterdiode vorgesehen.

Vorteilhaft ist es, wenn von zwei benachbarten, durch eine grabenförmige Vertiefung getrennten Halbleiterdioden, deren Kantenstrahlungscharakteristiken sich wenigstens teilweise überlappen, beide lumineszierende oder lasernde Halbleiterdioden sind, und wenn die benachbarten Halbleiterdioden mit ihrer Kantenstrahlung zur gegenseitigen Kennlinieneinstellung vorgesehen sind.

Eine vorteilhaft konstruktive Ausgestaltung besteht darin, daß die Halbleiterdioden auf einem Substrat angeordnet sind, das zusätzlich mit einer vollintegrierten oder hybriden Schaltung zur Aufbereitung der an wenigstens einer der Halbleiterdioden abgenommenen, für die zu bestimmende Temperatur charakteristischen Werte und einer Anschlußvorrichtung für die Weiterleitung der elektrischen Werte versehen ist. Eine alternative vorteilhafte konstruktive Ausgestaltung besteht darin, daß das Substrat länglich ausgebildet und an dem einen Ende mit der Anschlußvorrichtung und an dem anderen Ende mit den Halbleiterdioden und außerdem mit der zur Aufbereitung dienenden Schaltung, vorzugsweise im mittleren Substratbereich, versehen ist. Nach einer weiteren vorteilhaften konstruktiven Ausgestaltung ist ein Substrat vorgesehen, das mit einer vorzugsweise vollintegrierten oder hybriden Schaltung zur Aufbereitung der an den Halbleiterdioden abgenommenen, für die zu bestimmende Temperatur charakteristischen Werte und einer Anschlußvorrichtung für die Weiterleitung der elektrischen Werte versehen ist, und bei dem die aus den beiden Halbleiterdioden bestehende Doppeldiode von dem Substrat abgesetzt und über ein vorzugsweise katheterähnlich ausgebildetes Leitungsbündel mit der Substratschaltung verbunden ist.

Vorteilhaft ist es, wenn mehrere, über die Kantenstrahlung verkoppelbare, durch eine grabenförmige Vertiefung getrennte Doppeldioden vorgesehen und geometrisch nach Art einer Reihe oder einer Matrix zur Aufnahme von Temperaturprofilen angeordnet sind.

Vorteilhafte Ausgestaltungen bestehen ferner in folgendem. Von zwei benachbarten, über eine Kantenstrahlung verkoppelbaren Halbleiterdioden wird nur eine zur Ableitung eines für die zu bestimmende Temperatur charakteristischen elektrischen Wertes vorgesehen. Von zwei benachbarten, über eine Kantenstrahlung verkoppelbaren Halbleiterdioden wird eine der Halbleiterdioden zur Messung und/oder Kompensation des Kontaktwiderstandes der anderen Halbleiterdiode vorgesehen. Die zur Ableitung eines für die zu bestimmende Temperatur charakteristischen Wertes dienende Halbleiterdiode wird als temperaturabhängiger optischer Empfänger für die von der anderen Halbleiterdiode auf sie auftreffende Kantenstrahlung vorgesehen. Eine als Empfänger vorgesehene Halbleiterdiode, vorzugsweise eine Fotodiode, hat eine größere Aufnahmefläche für die auf sie auftreffende Kantenstrahlung, als die ihr gegenüberstehende leuchtende Fläche der lumineszierenden oder lasernden Halbleiterdiode. Das gilt auch, wenn beide Halbleiterdioden lumineszierend oder lasernd sind. Die Betriebschaltung von zwei über die Kantenstrahlung gekoppelten Halbleiterdioden ist derart ausgebildet, daß zumindest eine lumineszierende oder lasernde Halbleiterdiode von einem Vielfachen des Stromes durch die andere Halbleiterdiode durchflossen wird, und als Maß für die Temperatur die Differenz der Spannungsabfälle an beiden Halbleiterdioden vorgesehen ist. Nach einer anderen vorteilhaften Weiterbildung des Temperatursensors ist die Halbleiter-Doppeldiode mit einem optischen Ausgang, vorzugsweise in Form eines Lichtwellenleiters, der von den Halbleiterdioden emittiertes Licht auskoppelt, versehen. Dieses Licht kann als Meßsignal und/oder als Sensorfunktionskontrolle dienen. Vorteilhaft ist es hierbei, wenn eine Sensorfunktionskontrolle jeweils nur für einen, vorzugsweise periodisch sich wiederholenden, kurzen Zeitraum, bezogen auf die Meßzeit des Sensors, vorgesehen ist.

Der erfindungsgemäße Temperatursensor ist mit Vorteil auch als thermischer Strömungsmesser vor allem dann geeignet, wenn ein Führungskanal für die Strömung vorgesehen wird, in dem wenigstens eine einen Temperatursensor bildende Halbleiter-Doppeldiode angeordnet ist, deren elektrischen Werte als Meßgröße für strömungstechnische Parameter dienen. Solche strömungstechnische Parameter sind vor allem die Strömungsgeschwindigkeit und die Strömungsrichtung. In vorteilhafter Weise eröffnet der erfindungsgemäße Temperatursensor, vor allem in der Anwendung als Strömungssensor, die Möglichkeit, pro räumlichem Meßpunkt die an den beiden Halbleiterdioden abfallenden elektrischen Spannungen und die zwischen den beiden Halbleiterdioden abfallende elektrische Spannung als Meßgrössen abzuleiten. Bei einem erfindungsgemäßen Strömungsmesser kann auch eine Vorrichtung zur Aufteilung des Führungskanals in zwei strömungstechnisch parallele Teilkanäle wesentlich unterschiedlichen Fördervolumens vorgesehen und wenigstens eine Halbleiter-Doppeldiode in dem Teilkanal mit wesentlich geringeren Fördervolumen angeordnet werden. Wird dabei die Halbleiter-Doppeldiode so ausgerichtet angeordnet, daß ihre beiden Halbleiterdioden in Strömungsrichtung hintereinander liegen, so wird es möglich aus den bei einer Strömung von den Halbleiterdioden ableitbaren elektrischen Werten zu dem für die Strömungsgeschwindigkeit charakteristischen Signal zusätzlich oder auch allein eine Meßgröße für die Strömungsrichtung abzuleiten. Dazu können mit Vorteil mehr als eine Halbleiter-Doppeldiode in Strömungsrichtung nach Art einer Zeile hintereinander liegend, flächenhaft nach Art einer Matrix oder räumlich verteilt vorgesehen und die von den einzelnen Halbleiterdioden bei einer Strömung ableitbaren elektrischen Werte für strömungstechnische Parameter als Meßgrößen vorgesehen werden.

Die erfindungsgemäße Ausbildung eines Temperatursensors ermöglicht eine einheitliche technische Konstruktion für einen weiten Temperaturbereich von etwa 4 K bis etwa 1000 K und die Realisierung einer gegenüber bisherigen Lösungen hohen Ausfallsicherheit durch die Redundanzmöglichkeiten. Das Erreichen sehr hoher Einsatztemperaturen läßt sich durch die Materialauswahl, zum Beispiel von GaP und SiC als Grundmaterial sicherstellen. Die Lumineszenz von SiC unter einem Kontakt wurde schon 1907 von Round entdeckt (Electron.World, 149, 1907,S.308/309 und eingehend von Lossew untersucht (Telegrafia-Telefonia 18, 1921, Seiten 61/63 (russisch); Wireless World, 271, 83, 1924; Phys.Z., 30, 920, 1927) sowie von W.T.Eriksen; "Silicon Carbide a high temperature semiconductor" New York Pergamon Press, 1960, Griffits u.a., Proc.IEEE, 51, 1374, 1963 und R.H.Hall, Proc.IEEE, 52, 91, 1964. Die Dotierung solcher Materialien ist vorbekannt. Für Siliziumkarbid SiC mit hexagonaler Kristallstruktur kommt beispielsweise Bor in Betracht. Als Donatoren sind ferner Stickstoff und Phosphor für n-Leitung und als Akzeptoren beispielsweise Arsen für p-Leitung geeignete Materialien. Als Kontaktmaterial für den n-Kontakt hat sich eine Legierung aus 50% Gold und 50% Tantal bewährt und für den p-Kontakt eine Silber enthaltende Paste. Die Lichtfarbe läßt sich in bekannter Weise durch Kristalltyp und Dotierung festlegen.

Die erfindungsgemäße Ausbildung eines Temperatursensors zeichnet sich durch eine äußerst geringe Masse und damit Wärmekapazität aus, ist also rasch auf Temperaturänderungen reagierend. Die nur geringen äußeren Abmessungen ermöglichen auch den Einsatz in einem weiten Anwendungsgebiet.

Durch das erwähnte Buch (Seite 162) ist es an sich bekannt, in einer großflächig dotierten Halbleiterscheibe durch Sägeschnitte eine Auftrennung in eine größere Anzahl von Einzeldioden vorzunehmen. Die durch Einsägung erzeugten Trennungsgräben zwischen den Einzeldioden bilden einen Wechselwirkungsraum für Gase und andere Meßgrößen. Dabei handelt es sich also nicht um einen Temperatursensor im Sinne der Erfindung. Ähnliche Halbleiter-Vorrichtungen zeigen außer den US-Patentschriften 5 091 757, 5 281 829 und 5 032 879 noch unter anderem die Deutschen Patentschriften 34 12 766 Al und A 37 36 026 A1. Bei den in diesen Schriften behandelten Halbleiter-Vorrichtungen handelt es sich durchwegs nicht um Einrichtungen, die einer Temperaturbestimmung dienen. Nach einem älteren Vorschlag wird ein Kraftsensor dadurch realisiert, daß man ein balkenförmiges, dotiertes Halbleitersubstrat als Biegebalken ausbildet, dessen zwischen den Dioden liegender Bereich als grabenförmige Einschnürung ausgebildet ist, um so einer-

EP 0 741 860 B1

seits eine gut biegbare elastische Zunge zu haben und um andererseits den Lichtübertritt von der einen, als Lichtsender mit Kantenstrahlung betriebenen Diode in die andere, als Lichtempfänger genutzte Diode sicherzustellen. Bei der Biegung der Zunge durch Krafteinwirkung tritt eine Änderung in der Beleuchtung der als Lichtempfänger benutzten Diode ein. Auch hier handelt es sich somit um keinen Temperatursensor im Sinne der Erfindung.

Nachstehend wird die Erfindung anhand von Ausführungsbeispielen und einer Zeichnung näher erläutert.

In der Zeichnung zeigt

Figur 1       einen Sensorbaustein mit zwei Halbleiterdioden,
Figur 2       einen Kennlinienverlauf bei Konstantstromspeisung,
Figur 3       einen Kennlinienverlauf bei Konstantspannungsspeisung,
Figur 4       den temperaturabhängigen Verlauf der Beleuchtungsstärke B,
Figur 5       einen Träger mit einem Sensorbaustein,
Figur 6       einen Sensorbaustein mit mehreren Diodenpaaren,
Figur 7       ein mit Bahnwiderständen Ri und Kontaktwiderständen Rk erweitertes Ersatzschaltbild für eine Doppeldiode,
Figur 8       eine als Sender-Empfänger-Anordnung geschaltete Doppeldiode,
Figur 9       eine wechselweise betriebene Doppeldiode mit entsprechender Beschaltung,
Figur 10      eine "bandgap-Schaltung" der Doppeldiode,
Figur 11      eine abgewandelte "bandgap-Schaltung",
Figur 12      ein Beispiel mit einem abgesetzten Diodenpaar,
Figur 13      ein Beispiel für die Realisierung optischer Ausgänge,
Figur 14      einen Temperatursensor als Strömungsmesser,
Figur 15      einen Temperatursensor als Strömungsmesser mit einer drei Halbleiterdioden umfassenden Mehrfachdiode und
Figur 16      eine Matrix aus Temperatursensoren, beispielsweise zur Bestimmung der Richtung einer Strömung durch Ausmessung eines flächenhaften Wärmefeldes, zusammen mit dem Blockschaltbild einer Auswerteschaltung.

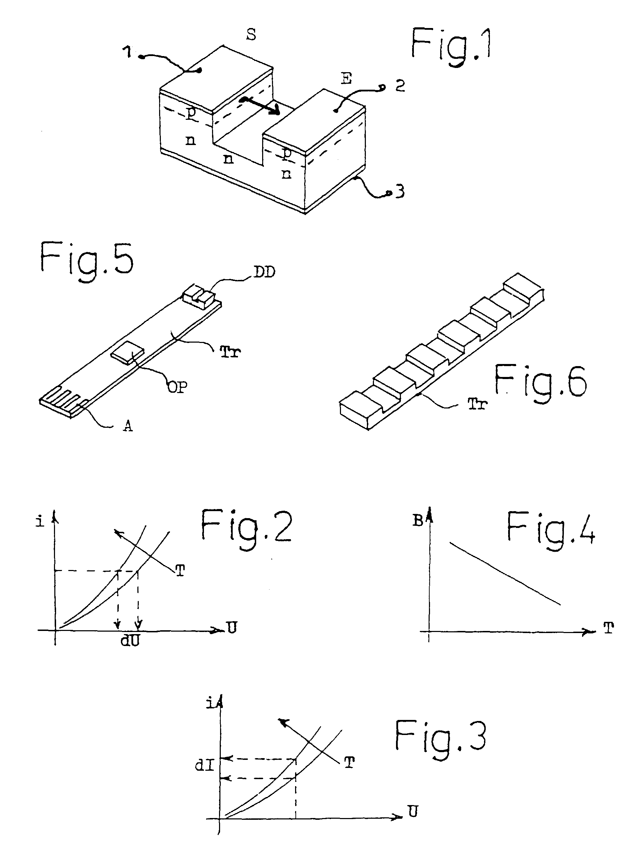

Der in der Figur 1 dargestellte Sensor umfaßt zwei Halbleiterdioden. Die eine Halbleiterdiode dient beispielsweise als Lichtsender S mit einer Wellenlänge seiner Strahlung von 607 nm und die andere als Lichtempfänger E. Die beiden Halbleiterdioden werden auf einem n-leitenden GaAsP-Substrat mit der Dicke 250 µm, jeweils mittels einer p-leitenden Schicht der Dicke 1,5 µm in Form eines sogenannten pn-Überganges gebildet. Für die Kontaktierung ist auf den beiden Halbleiterdioden eine flächenhafte, lichtundurchlässige 1 µm dicke Aluminium-Elektrode auf den p-leitenden Schichten vorgesehen. Auf der Unterseite des n-leitenden Substrats befindet sich eine gemeinsame, lichtundurchlässige flächenhafte AuGe-Elektrode zur Kontaktierung. Entsprechend sind die beiden Halbleiterdiodenanschlüsse mit 1 und 2 und der Substratanschluß mit 3 bezeichnet. Um eine der Halbleiterdioden als Lichtsender zu betreiben, ist sie in an sich bekannter Weise in Flußrichtung zu betreiben. Für die Nutzung als Lichtempfänger ist die Halbleiterdiode in Sperr-Richtung als Fotodiode oder im IV. Quadranten der Strom-Spannungs-Kennlinie als Fotoelement zu betreiben. Wird als Material GaAsP benutzt, so hat man einen guten Lichtsender und einen - wenn auch mit geringerer Empfindlichkeit im Vergleich zu Silizium-Fotodioden vorliegenden - Lichtempfänger im gleichen Substrat zur Verfügung. Die Quadrantenbezeichnung ist an sich bekannt. Der IV. Quadrant ist danach der Bereich positiver Abszissen- und negativer Ordinatenwerte in der karthesischen Darstellung des Strom-Spannung-Kennlinienfeldes, bei der die Abszisse der Spannung und die Ordinate dem Strom zugeordnet ist.

Ein Halbleiterchip mit den Lateralabmessungen 230 µm x 230 µm mit dem Substratbereich zwischen dem Lichtsender S und dem Lichtempfänger E ist in an sich bekannter Weise, beispielsweise durch Ätzung, Einsägung oder durch Laserbearbeitung so in seiner Dicke vermindert, daß eine Art Graben mit einer Grabenbreite von z.B. 40 µm und einer Grabentiefe von z.B. 60 µm entsteht, der den Raum zwischen den lichtsensitiven beziehungsweise lichtemittierenden Kantenbereichen beider Dioden frei stellt.

Für den Fall, daß die Halbleiterdiode als Lichtsender dienen soll, ist es von Vorteil, wenn sie als sogenannte Lumineszenzdiode ausgebildet ist, die nach Art eines Kantenstrahlers seitlich strahlt. Das Licht tritt also in der durch den pn-übergang dieser Halbleiterdiode bestimmten Ebene in Richtung des eingezeichneten Pfeiles aus. Es ist relativ stark gebündelt und trifft auf den Bereich des pn-Übergangs der anderen Halbleiterdiode.

Die Wirkungsweise des erfindungsgemäßen Temperatursensors mit der Halbleiter-Doppeldiode kann man sich wie folgt verdeutlichen. Da die beiden Einzeldioden den gemeinsamen Substratanschluß 3 und getrennte Einzelanschlüsse 1, 2 haben, ist im einfachsten Fall die Halbleiter-Doppeldiode als elektrische und geometrische Kombination einer lumineszierenden oder lasernden Halbleiterdiode mit einer Fotodiode oder im weiterbildenden Sinn als Kombination von zwei lumineszierenden oder lasernden Halbleiterdioden aufzufassen, die komplex gekoppelt sind. Es lassen sich im wesentlichen drei physikalische Effekte für die Koppplung der beiden Halbleiterdioden ermitteln. Es ist dies zum einen der Wärmefluß, der vorrangig über den Substratabschnitt im Bereich der grabenförmigen Vertiefung zwischen den beiden Halbleiterdioden erfolgt. Er ist durch das Substratmaterial in diesem Bereich und über die Abmessung des Substratabschnitts bestimmt und somit bei der Fertigung der Halbleiter-Doppeldiode innerhalb bestimmter Grenzen festlegbar. Beim Betrieb der Halbleiter-Doppeldiode kann dann innerhalb dieser Grenzen durch die Wahl der Stromstärke in der jeweils lumineszierenden oder lasernden Halbleiterdiode und der davon abhängenden Eigenererwärmung der Wärmefluß gezielt innerhalb der Grenzen eingestellt werden. Zum anderen ist eine optische Kopplung über den Lichtfluß der lichtemittierenden Halbleiterdiode auf die ihr gegenüberliegende andere Halbleiterdiode gegeben. Das Wellenlängenmaximum und die Intensität des Lichtflusses bzw. der Strahlung sind temperaturabhängig und damit auch die optische Kopplung. Desweiteren ist über das beiden Halbleiterdioden gemeinsame Halbleitersubstrat bzw. den Bahnwiderstand und den darüber verlaufenden Stromfluß eine elektrische Kopplung existent. Durch die Konstruktion der Halbleiter-Doppeldiode, vor allem die Grabenform, die Abmessungen des Halbleiterkörpers und die Auswahl des Halbleitermaterials und dessen Dotierung und im Betrieb durch die Wahl der Ströme in den einzelnen Halbleiterdioden lassen sich die einzelnen Kopplungen in dem benötigten Umfang gezielt beeinflussen, also anheben oder mindern.

Betrachtet man den Fall einer lichtemittierenden Halbleiterdiode und einer Fotodiode, so ist erkennbar, daß die lichtemittierende Halbleiterdiode durch den sie durchfließenden Strom erhitzt wird und dadurch über den Wärmefluß und die thermisch beeinflußte optische Kopplung auf das Kennlinienfeld der anderen Halbleiterdiode einwirkt und somit einstellbar macht.

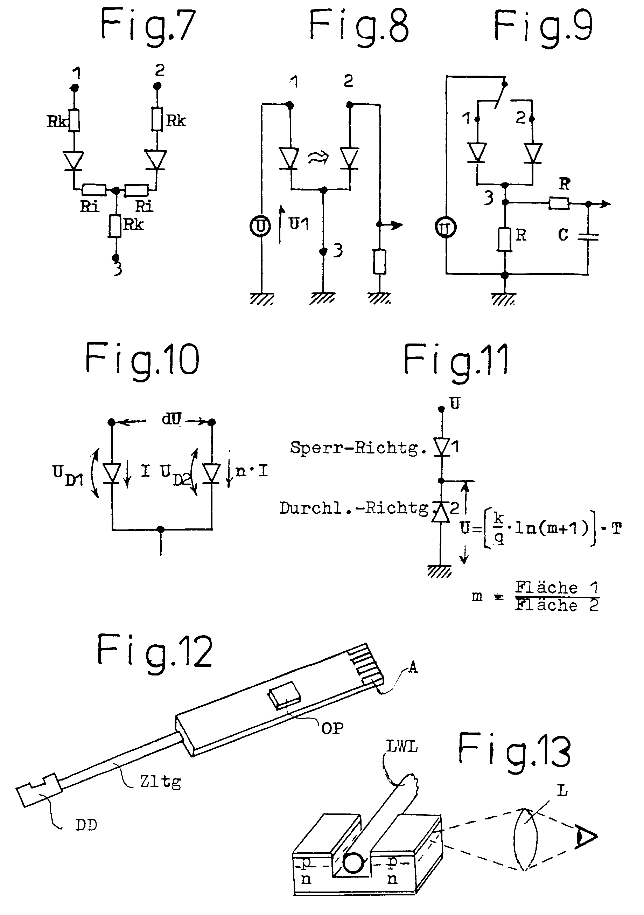

Die Halbleiterdioden können in unterschiedlicher Weise für eine Temperaturbestimmung eingesetzt werden. Dies ist in den Figuren 2 bis 4 mit Kennlinien schematisch angedeutet. Wird - wie für die Figur 2 angenommen - eine Halbleiterdiode mit konstantem Strom, also aus einer Stromquelle hohen Innenwiderstandes gespeist, so nimmt mit zunehmender Temperatur T der Halbleiterdiode die an ihr abfallende Spannung ab. Diese Spannungsabnahme ist mit dU bezeichnet und beträgt etwa 2 bis 3 mV/K. Wird - wie für die Figur 3 angenommen - die Halbleiterdiode aus einer Quelle konstanter Spannung, also sehr niedrigen Innenwiderstandes gespeist, so nimmt der die Diode durchfließende Strom i mit steigender Temperatur T zu. Die Stromzunahme ist mit dI bezeichnet und kann bei 7%/K liegen. Betreibt man eine Halbleiterdiode - so wie für die Figur 4 angenommen - als Lichtsender, so nimmt in der Regel mit zunehmender Temperatur T deren Beleuchtungsstärke B ab. Durch geeignete Dotierung lassen sich in an sich bekannter Weise auch andere Abhängigkeiten einstellen.

Der erfindungsgemäße Temperatursensor ermöglicht durch seine besondere Ausbildung, daß in diesem Sinne die einzelnen Dioden in mehreren Betriebsmodi betrieben werden können und eröffnet so einen schaltungstechnisch weiten Bereich.

In der Figur 5 ist eine vorteilhafte Hybrid-Ausführung eines Temperatursensors dargestellt. Auf einem länglichen Substrat Tr mit der Breite von z.B. 2,68 mm ist an einem Ende die als eigentlicher Sensor dienende Doppeldiode DD angeordnet. Am anderen Ende des Substrats sind Anschlüsse A für die Abnahme des Meßsignals und die Betriebsstromversorgung vorgesehen. Im mittleren Bereich des Substrats S ist für die schaltungstechnische Vervollständigung des Temperatursensors eine an sich bekannte Schaltung vorgesehen, beispielsweise ein Operationsverstärker OP. Solche Vervollständigungen sind in dem vorerwähnten Buch beispielsweise auf den Seiten 88 bis 96 und im Kapitel 3 (Integrierte Meßgrößenaufbereitung) mit Literaturnachweisen behandelt. Das Substrat Tr kann aus einem nichtleitenden Träger bestehen, auf den die Elemente A, OP und DD in Hybridtechnik an sich bekannter Art aufgebracht sind. Es ist aber auch eine Bauweise möglich, bei der auf einem Träger Tr aus halbleitendem Material die einzelnen Elemente in an sich bekannter Halbleitertechnik reproduziert sind. Einzelne der Anschlüsse können auch Lichtleiter sein, die das Licht zu dem eigentlichen Sensor zuführen oder von diesem ausgehendes Licht nach außen zur Auswertung abführen.

Auch kann, vor allem bei Hybridausführung, ein solcher Sensor auch mit einer Betriebsstrom- oder Betriebsspannungs-Quelle versehen und damit zu einem autonomen Sensor vervollständigt werden. Die autonome Ausbildung kann sogar soweit geführt werden, daß jegliche äußere Zuleitung fortgelassen wird und die elektrischen Meßwerte nach Umformung in optische Signale berührungslos nach außerhalb des Sensors zu entsprechenden Empfängern für die Auswertung geführt werden. Als solche optische Signale kann auch die von den einzelnen Halbleiterdioden abgegebene optische Strahlung dienen.

Die Doppeldiode kann auch von dem Träger Tr abgesetzt und mit der auf diesem befindlichen Schaltung über eine dünne Zuführungsleitung ZLtg - wie in der Figur 12 gezeigt - verbunden werden. Zltg kann auch katheterförmig ausgebildet werden oder eine sogenannte Katheterelektrode, mit einer Länge von z.B. von 1,1 m und einem Durchmesser von z.B. 1,2 mm sein. Die Doppeldiode ist in diesem Fall mit einer eigenen Halterung, vorzugsweise geringer Wärmekapazität, in an sich bekannter Weise und einem entsprechenden Anschluß für die Zuführungsleitung Zltg zu versehen.

In der Figur 6 ist ein Sensorelement dargestellt, bei dem mehrere Elemente nach der Figur 1 nach Art einer Reihe auf einem, vorzugsweise halbleitenden Substrat vorgesehen sind. Die aus Gründen der übersichtlichkeit nicht dargestellten Anschlüsse der einzelnen Doppeldioden sind auf dem gemeinsamen Träger Tr, ähnlich zu dem Ausführungsbeispiel nach der Figur 5 zu einem gemeinsamen Anschluß A geführt. Eine solche Ausbildung ermöglicht es auf einfache Weise Temperaturprofile entlang einer vorgegebenen geometrischen Linie aufzunehmen, wie es beispielsweise in dem vorerwähnten Buch auf Seite 180 gezeigt und beschrieben ist.

In der Figur 7 ist ein Ersatzschaltbild einer solchen Doppeldiode wiedergegeben, wie es für den Einsatz als Temperatursensor verwendbar ist, mit den äußeren Anschlüssen 1, 2 und 3, den Innenwiderständen Ri und den Kontaktwiderständen Rk. In dem Ersatzschaltbild sind aus Gründen der Übersichtlichkeit die durch die Kantenstrahlung in den jeweils gegenüberliegenden Zweigen induzierten Spannungen zwar fortgelassen. Sie sind aber charakteristisch für die Wirkungsweise eines erfindungsgemäßen Temperatursensors. Wird stromlos die Spannung zwischen den Anschlüssen 2 und 3 gemessen, so ist sie ein Maß für den Kontaktwiderstand Rk, der im übrigen wegen seiner Temperaturabhängigkeit als zusätzliches redundantes Maß der Temperatur dienen kann.

Die Figur 8 zeigt den Fall, daß die Halbleiterdiodenstrecke 1-3 als Lumineszenzdiode und die Halbleiterdiode 2-3 als Fotodiode geschaltet ist. U1 ist die Betriebsspannungsquelle der ersten Diode. An dem Lastwiderstand Rv fällt, infolge der temperaturabhängigen Strom-Spannung-Kennlinienverschiebung und der temperaturabhängigen Leuchtdichteabnahme, ein temperaturabhängiges, elektrisches Signal, wie bei einer Solarzelle, für die weitere Auswertung an.

In der Figur 9 ist ein Betrieb gezeigt, bei dem jeweils nur eine der beiden Dioden für die Messung einer Temperatur verwendet wird. Zu diesem Zweck sind die Anschlüsse 1, 2 zu einem Umschalter geführt, der sie wechselweise im Takt einer Umschaltfrequenz mit der erforderlichen Betriebsspannung U beziehungsweise mit dem entsprechenden Betriebsstrom versorgt. An dem in die Zuleitung zum Anschluß 3 eingefügten Widerstand R wird die für den Meßvorgang charakteristische, temperaturabhängige elektrische Größe abgegriffen. Über einen anschließenden Tiefpaß beispielsweise aus einem Widerstand R Kondensator C kann die elektrische Größe als von dem Umschalten befreite kontinuierliche Größe entnommen werden. Durch Wahl der Taktzeiten beziehungsweise des Tastverhältnisses sind hierbei die elektrische Belastung und damit die Eigenerwärmung der Dioden weitgehend frei wählbar, beziehungsweise einstellbar.

Der erfindungsgemäße Temperatursensor ist in unterschiedlichster Schaltungsweise einsetzbar, so auch im "bandgap-Betrieb". Steuert man hierzu die beiden Dioden - siehe Figur 10 - durch zwei verschiedene Ströme an, so ist die Spannungsdifferenz U direkt proportional der Temperatur T. Mathematisch ist dies wie folgt beschreibbar:

$$U_{D1} \text{ prop. } U_T * \ln(I/I_s)) \quad U_{D2} \text{ prop. } U_T * \ln(nI/I_s); \quad U_T = T * k/q \quad U = U_{D2} - U_{D1}; \quad T \text{ prop. } U * q/(k * \ln(n)). \qquad [1]$$

Darin bedeuten:

(k = Boltzmannkonstante; q = Elementarladung;
T = Temperatur in Kelvin;
$I_s$ = Sperrstrom:
n = Stromverhältnisfaktor)

Schaltet man die Dioden - entsprechend der Figur 11 - antiseriell und ordnet man - bezogen auf die Doppeldiode nach der Figur 1 - den die beiden Dioden trennenden Graben außermittig an, wodurch unterschiedlich große Diodenflächen entstehen, so arbeitet die Schaltung ähnlich dem "bandgap-Prinzip", jedoch ohne die Differenzverstärkung. Die Definition der in den Formeln verwendeten Größen ist, soweit nicht in den Figuren 10 und 11 eingetragen, dem Kapitel 2.1.2, insbesondere der Seite 91 und dem Formelverzeichnis des vorerwähnten Buches entnehmbar.

Auch können beide Dioden zugleich als Lumineszenzdioden in der Weise betrieben werden, daß eine Diode zur Temperaturmessung mittels temperaturabhängigen Arbeitspunktes genutzt wird. Die andere Diode kann dann mittels definierter Erwärmung durch einen Stromfluß z.B. für eine Funktionskontrolle durch Leuchten oder für eine Kennlinienkorrektur bei der ersten Diode, mit der die Temperatur gemessen wird, gleichbedeutend einer Steuerbarkeit derselben, genutzt werden.

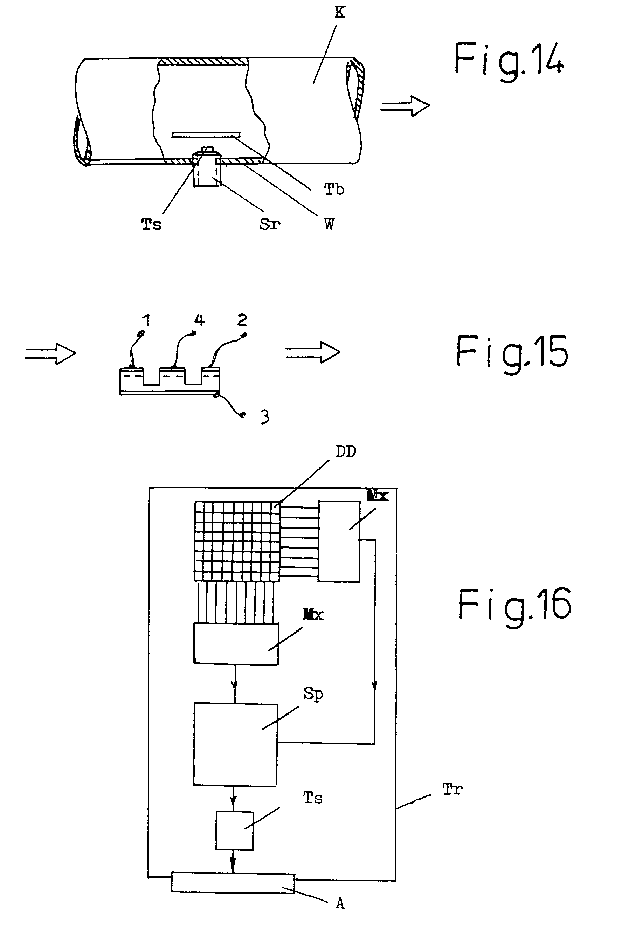

Die Lichtstrahlung der emittierenden Diode läßt sich in unterschiedlichster Weise nutzen. Dies ist in der Figur 13 dem Prinzip nach dargestellt. Wird die Diode D1 als LED und die Diode D2 als Speisung des elektrischen Ausgangs Aus betrieben, so kann mit einem Lichtwellenleiter Lwl Licht aus dem zwischen den Dioden befindlichen Graben ausgekoppelt werden. Die Lage bzw. Orientierung des Lichtwellenleiters richtet sich nach dem im Einzelfall geforderten Umfang der Lichtauskopplung in den Lichtwellenleiter Lwl. Dies gilt auch für die Formgebung von Lichtwellenleiter und Graben im Auskopplungsbereich. Man erhält dann einen optischen Ausgang, der von außen über einen Lichtwellenleiter erreichbar ist. Man kann aber auch mittels eines optischen Systems die nach ausserhalb der Doppeldiode emittierte Strahlung als weiteren optischen Ausgang nutzen. Ein solches optisches System kann beispielsweise ein optisches System zur Betrachtung, wie eine optische Linse L, sein. Es ist so möglich, ohne direkte Berührung und gegebenenfalls auch auf Entfernung zu messen.

Unter Redundanz wird im vorstehenden verstanden, daß mehrere aus der Doppeldiode in Form einer Multisensorik ableitbare Signale beziehungsweise elektrische Größen über die Eigenschaften der Doppeldiode miteinander verknüpft sind, wodurch es möglich wird diese Signale und Größen bei der Auswertung getrennt und redundant zu verwenden, als auch miteinander zu verknüpfen, sei es um eine mehrfache Auswertung zu erzielen, sei es um eine Schaltung zur Erhöhung der Sicherheit gegen den Ausfall eines Sensors zu betreiben. Zu erwähnen ist noch, daß die Wärmekapazität der Doppeldiode und die Verkopplung der Dioden durch die Wahl der Grabenabmessungen festlegbar sind.

Wie vorstehend bereits ausgeführt, kann ein erfindungsgemäßer Temperatursensor mit Vorteil als Strömungsmesser für Gase und Flüssigkeiten eingesetzt werden. Dabei ist gegebenenfalls in an sich bekannter Weise, z.B. durch Schutzüberzüge sicherzustellen, daß das Strömungsmedium das Material des Temperatursensors nicht angreift.

Die im vorstehend angegebenen Gleichungssystem [1] verwendeten Meßgrößen $U_{D1}$, $U_{D2}$ und U sind funktional auch von den Strömungsparametern abhängig, so vor allem auch von der Strömungsgeschwindigkeit und der Strömungsrichtung und der Umgebungstemperatur $T_u$. Im einzelnen ist die Abhängigkeit über die Gleichung erkennbar, mit der die Leistungsänderung dP beschreibbar ist und die wie folgt lautet:

$$dP = I * dT * [Lamda_F + \sqrt{2 * \pi * Lamda_F * C_p * Rho_F * V}] \qquad [2]$$

Darin bedeuten:

dP = Leistungsänderung,
dT = Temperaturdifferenz,
$Lamda_F$ = Wärmeleitfähigkeit,
$c_p$ = spez. Wärmekapazität,
1, D = Abmaße;
$Rho_F$ = Dichte;
V = Strömungsgeschwindigkeit;
$Rho_F * V * A$ = Massenfluß;
A = Fläche.

Diese Beziehung ist beipielsweise durch King seit langem vorbekannt und u.a. in einem Artikel in der Zeitschrift "SENSOR Report" 3/1994, Seiten 23 bis 25 in der Anwendung auf Strömungsmesser behandelt. Die dort angegebene Größe $i^2R_s$ entspricht der Größe dP in vorstehender Gleichung [2]. Mit dieser bekannten Beziehung lassen sich die einzelnen Größen gewinnen. Wird beispielsweise V=0 gesetzt, so geht die Gleichung [2] über in:

$$dP = I * dT * Lamda_F \qquad [3]$$

woraus $Lamda_F$ als ein Strömungsparameter ermittelbar ist.

Führt man über einen solchen Temperatursensor ein Strömungsmedium, zum Beispiel eine Gasströmung, so wird die Temperatur des Sensors beeinflußt und damit die Möglichkeit eröffnet, die Existenz einer Strömung durch die dann eintretende Änderung der vom Temperatursensor abgeleiteten elektrischen Werte nachzuweisen. Die Temperaturänderung wird damit im wesentlichen von der Strömungsgeschwindigkeit des Strömungsmediums bestimmt, sodaß die elektrischen Werte eine eindeutige Aussage über die Strömungsgeschwindigkeit des Strömungsmediums am Temperatursensor darstellen. Sind die beiden Halbleiterdioden lichtemittierend, so ergibt dies die Möglichkeit der gegenseitigen Steuerung beider Halbleiterdioden, sowohl über den Wärmefluß als auch über die Strahlung.

Außer der Strömungsgeschwindigkeit ist manchmal auch die Strömungsrichtung von Interesse. Diese läßt sich mit nur einem erfindungsgemäßen Temperatursensor ermitteln, wenn beide Halbleiterdioden der Halbleiter-Doppeldiode in Strömungsrichtung hintereinanderliegend im Strömungsweg angeordnet sind. Das ist in Fällen reproduzierbar, bei denen das Strömungsmedium in einem Führungskanal K geführt ist, in dessen Wandung W, so wie in der Figur 14 gezeigt, der Temperatursensor Ts auf einem Träger, wie einer Schraube Sr montiert ist. Durch Drehung der Schraube läßt sich die gewünschte Position einstellen. In der Regel sind auf diese Weise nur dann ausreichende Richtungsinformationen durch unterschiedliche Temperaturen beider Halbleiterdioden erreichbar, wenn die Strömungsgeschwindigkeit einen sehr kleinen Wert hat. Das ist jedoch dadurch behebbar, daß der Führungskanal K in zwei strömungstechnisch parallele Teilkanäle wesentlich unterschiedlichen Fördervolumens durch eine Vorrichtung, beispielsweise eine Unterteilungsblende, aufgeteilt und der Temperatursensor in dem Teilkanal mit dem wesentlich kleineren Fördervolumen angeordnet wird. Eine solche Unterteilungsblende Tb ist in der Figur 14 mit eingezeichnet. Die Anwendung eines sogenannten Bypasses bei Mikroanemometern ist an sich vorbekannt, beispielsweise durch die Zeitschrift "Technisches Messen" 61 (1994) 7/8, Seiten 285 bis 294.

Auch läßt sich die Messung der Strömungsrichtung dadurch verbessern, daß anstelle einer einzelnen Halbleiter-Doppeldiode mehrere in Strömungsrichtung hintereinanderliegend angeordnet werden. Aus deren elektrischen Werten wird dann die Richtungsinformation abgeleitet. Die einzelnen Halbleiter-Doppeldioden können auch zu einer Halbleiter-Mehrfachdiode vereinigt werden, die z.B. drei Halbleiterdioden in einem gemeinsamen Halbleitersubstrat umfaßt; somit dem Grundaufbau nach der Figur 6 entspricht. Dieser Fall ist in der Figur 15 dargestellt. Alle drei Dioden sind als lumineszierende oder lasernde Halbleiterdioden vorausgesetzt. In diesem Fall ist die Halbleiterdiode mit den Anschlüssen 1-3 als Umgebungstemperatursensor, die Halbleiterdiode mit den Anschlüssen 2-3 als Heizer und die Halbleiterdiode mit den Anschlüssen 4-3 als sogenannter dP(v)-Messer in an sich bekannter Weise einsetzbar (siehe beispielsweise das erwähnte Buch Ahlers - Waldmann, Seite 134; Theo S.J.Lammerink et al, in "Sensors and Actuators A", 37-38 (1993) 45-50, Verlag Elsevier Sequoia (1993) und die oben zitierte Veröffentlichung in "Technisches Messen".

Auch ist eine Bestimmung der Strömungsrichtung durch Ausmessung des Strömungsfeldes bzw. des Wärmeprofils mittels einer Sensorzeile, wie sie die Figur 6 zeigt möglich oder durch über eine Fläche nach Art einer Matrix verteilte erfindungsgemäße Halbleitersensoren. Das ist vor allem dann von Interesse, wenn die Strömung nicht in einem die vorstehenden Bedingungen erfüllenden Führungskanal verläuft und die Strömungsrichtung in der Meßebene beliebig verlaufen kann. Beispielsweise kann dies mit wenigstens vier nach Art eines Rechtecks über eine Fläche verteilten Halbleiter-Doppeldioden geschehen, denen dann eine entsprechende Auswerteschaltung zuzuordnen ist. Eine feinere Auflösung läßt sich durch mehr Halbleiter-Doppeldioden erreichen, beispielsweise durch mehrere parallel zueinander angeordnete Sensorzeilen nach der Figur 6, so daß eine Zeilen und Spalten aufweisende Matrix aus Halbleiter-Doppeldioden gebildet wird.

In der Figur 16 ist ein Beispiel für diese Weiterbildung der Erfindung schematisch dargestellt. Auf einem Träger Tr aus Isolationsmaterial ist eine Matrix aus 8 mal 8 einzelnen Halbleiter-Doppeldioden aufgebracht. Jede der einzelnen Halbleiter-Doppeldioden DD ist sowohl mit einem acht Eingänge aufweisenden Multiplexer Mx für die serielle Auswertung der einzelnen Sensorsignale in den acht Zeilen der Matrix und ein ebensolcher Multiplexer für die serielle Auswertung der Sensorsignale in den Spalten der Matrix verbunden. Zweckmäßig werden die Sensorsignale über Multiplexer Mx aufgenommen, die zugeführte Sensorsignale zugleich in Digitalform erfassen. Die erfaßten Einzelwerte werden dann einem Speicher Sp zugeführt, dem sie über eine an sich bekannte Treiberschaltung Ts dem zweckmäßig als Steckerleiste ausgebildeten Anschlußteil A zugeführt werden. Bei in Digitalform von den einzelnen Sensoren abgenommenen Signalen kann der einzelne Multiplexer beispielsweise ein 8-Kanal-A/D-Wandler sein, wie der bekannte Controller µPD 78019 der Firma NEC. Als Speicher kann dann beispielsweise ein 64 kByte-Speicher in Form eines SRAM oder DRAM vorgesehen werden und als Treiber ein sogenannter RS 232-Treiber. Diese Ausgestaltung ist auch für den Fall anwendbar, daß mehrere Halbleiter-Doppeldioden nur in Form einer einzelnen Zeile oder einzelnen Spalte angeordnet und hinsichtlich ihrer Signale auszuwerten sind. Es entfällt dann einer der beiden Multiplexer.

Die einzelnen erfindungsgemäßen Temperatursensoren können beispielsweise zur Ausmessung der räumlichen Verteilung der Temperatur in einem Strömungsmedium entsprechend im Raum verteilt angeordnet werden.

Hervorzuheben ist, wie aus den vorstehenden Ausführungen erkennbar, für einen erfindungsgemäßen Temperatursensor, daß er wegen der extrem geringen Abmessungen der ihn bildenden einzelnen Halbleiter-Doppeldiode raumgeometrisch als ein Meßpunkt anzusehen ist und aus diesem einen Meßpunkt drei elektrische Meßwerte für die Auswertung ableitbar sind, die ihrerseits gemäß den Gleichungen [2] und [3] als Grundlage für die Berechnung weiterer Größen dienen können. Man erhält also beispielsweise aus zwei Halbleiter-Doppeldioden insgesamt sechs Meßgrößen, aus denen sich in an sich bekannter Weise, beispielsweise mittels Matrizenrechnung, sechs strömungstechnische Parameter bestimmen lassen.

## Patentansprüche

1. Temperatursensor mit wenigstens zwei, für die zu bestimmende Temperatur charakteristische elektrische Werte liefernden Halbleiterdioden, die als pn-Übergänge in einem Halbleitersubstrat ausgebildet sind, gekennzeichnet durch die Gesamtheit folgender Merkmale:

    a. wenigstens eine der Halbleiterdioden ist als lumineszierende oder lasernde Halbleiterdiode ausgebildet,
    b. die Halbleiterdioden in dem Halbleitersubstrat sind durch grabenförmige Vertiefungen elektrisch und geometrisch voneinander getrennt,
    c. die Halbleiterdioden sind in dem Halbleitersubstrat so angeordnet, daß sich ihre raumgeometrischen Kantenstrahlungscharakteristiken wenigstens teilweise überlappen,
    d. die lumineszierende oder lasernde Halbleiterdiode ist mit ihrer Strahlung zur Kennlinieneinstellung der mit ihr über die Kantenstrahlungstrahlung verkoppelten Halbleiterdiode vorgesehen.

2. Temperatursensor nach Anspruch 1, dadurch gekennzeichnet, daß von zwei benachbarten, durch eine grabenförmige Vertiefung getrennten Halbleiterdioden, deren Kantenstrahlungscharakteristiken sich wenigstens teilweise überlappen, beide lumineszierende oder lasernde Halbleiterdioden sind, und daß die benachbarten Halbleiterdioden mit ihrer Kantenstrahlung zur gegenseitigen Kennlinieneinstellung vorgesehen sind.

3. Temperatursensor nach Anspruch 1 oder 2, dadurch gekennzeichnet, daß die Halbleiterdioden auf einem Substrat angeordnet sind, das zusätzlich mit einer vollintegrierten oder hybriden Schaltung zur Aufbereitung der an wenigstens einer der Halbleiterdioden abgenommenen, für die zu bestimmende Temperatur charakteristischen Werte und einer Anschlußvorrichtung für die Weiterleitung der elektrischen Werte versehen ist.

4. Temperatursensor nach Anspruch 3, dadurch gekennzeichnet, daß das Substrat länglich ausgebildet und am einen Ende mit der Anschlußvorrichtung und am anderen Ende mit den Halbleiterdioden und außerdem mit der zur Aufbereitung dienenden Schaltung, vorzugsweise im mittleren Substratbereich, versehen ist.

5. Temperatursensor nach Anspruch 1 oder 2, dadurch gekennzeichnet, daß ein Substrat vorgesehen ist, das mit einer vorzugsweise vollintegrierten oder hybriden Schaltung zur Aufbereitung der an den Halbleiterdioden abgenommenen, für die zu bestimmende Temperatur charakteristischen Werte und einer Anschlußvorrichtung für die Weiterleitung der elektrischen Werte versehen ist, und daß die aus den beiden Halbleiterdioden bestehende Doppeldiode von dem Substrat abgesetzt und über ein, vorzugsweise katheterähnlich ausgebildetes Leitungsbündel mit der Substratschaltung verbunden ist.

6. Temperatursensor nach einem der vorhergehenden Ansprüche, dadurch gekennzeichnet, daß mehrere über Kantenstrahlung verkoppelbare, durch eine grabenförmige Vertiefung getrennte Doppeldioden vorgesehen und geometrisch nach Art einer Reihe, einer Matrix oder in räumlicher Verteilung, vorzugsweise zur Aufnahme von Temperaturprofilen, angeordnet sind.

7. Temperatursensor nach einem der vorhergehenden Ansprüche, dadurch gekennzeichnet, daß von zwei benachbarten, über eine Kantenstrahlung verkoppelbaren Halbleiterdioden nur eine zur Ableitung eines für die zu bestimmende Temperatur charakteristischen elektrischen Wertes vorgesehen ist.

8. Temperatursensor nach Anspruch 7, dadurch gekennzeichnet, daß von zwei benachbarten, über eine Kantenstrahlung verkoppelbaren Halbleiterdioden eine der Halbleiterdioden zur Messung und/oder Kompensation des Kontaktwiderstandes der anderen Halbleiterdiode vorgesehen ist.

9. Temperatursensor nach Anspruch 7, dadurch gekennzeichnet, daß die zur Ableitung eines für die zu bestimmende Temperatur charakteristischen Wertes dienende Halbleiterdiode als temperaturabhängiger optischer Empfänger für die von der anderen Halbleiterdiode auf sie auftreffende Kantenstrahlung vorgesehen ist.

10. Temperatursensor nach Anspruch 9, dadurch gekennzeichnet, daß die als Empfänger vorgesehene Halbleiterdiode eine Fotodiode ist, die eine größere pn-Sperrschichtfläche hat, als die lumineszierende oder lasernde Halbleiterdiode.

11. Temperatursensor nach einem der vorhergehenden Ansprüche, dadurch gekennzeichnet, daß eine als Empfänger vorgesehene Halbleiterdiode, vorzugsweise eine Fotodiode, eine größere Aufnahmefläche für die auf sie auftreffende Kantenstrahlung hat, als die ihr gegenüberstehende leuchtende Fläche der lumineszierenden oder lasernden Halbleiterdiode.

12. Temperatursensor nach einem der vorhergehenden Ansprüche, dadurch gekennzeichnet, daß die Betriebsschaltung von zwei über die Kantenstrahlung gekoppelten Halbleiterdioden derart ausgebildet ist, daß zumindest eine lumineszierende oder lasernde Halbleiterdiode von einem Vielfachen des Stromes durch die andere Halbleiterdiode durchflossen wird, und daß als Maß für die Temperatur die Differenz der Spannungsabfälle an den beiden Halbleiterdioden vorgesehen ist.

13. Temperatursensor nach einem der vorhergehenden Ansprüche, dadurch gekennzeichnet, daß die Halbleiter-Doppeldiode mit einem optischen Ausgang, vorzugsweise in Form eines Lichtwellenleiters, der von den Halbleiterdioden emittiertes Licht auskoppelt, versehen ist.

14. Temperatursensor nach einem der vorhergehenden Ansprüche, dadurch gekennzeichnet, daß als Sensorfunktionskontrolle die Lichtemission wenigstens einer der Dioden vorgesehen ist.

**15.** Temperatursensor nach Anspruch 14, dadurch gekennzeichnet, daß die Funkionskontrolle jeweils nur für einen, vorzugsweise periodisch sich wiederholenden, kurzen Zeitraum, bezogen auf die Meßzeit des Sensors, vorgesehen ist.

**16.** Temperatursensor nach einem der vorhergehenden Ansprüche, gekennzeichnet durch seine Ausbildung als thermischer Strömungsmesser in der Weise, daß ein Führungskanal für die Strömung vorgesehen ist, in dem wenigstens eine einen Temperatursensor bildende Halbleiter-Doppeldiode angeordnet ist, deren elektrischen Werte als Meßgrößen für strömungstechnische Parameter vorgesehen sind.

**17.** Temperatursensor nach Anspruch 16, dadurch gekennzeichnet, daß als Meßgrößen die an den beiden Halbleiterdioden abfallenden elektrischen Spannungen und die zwischen den beiden Halbleiterdioden abfallende elektrische Spannung vorgesehen sind.

**18.** Temperatursensor nach Anspruch 16 oder 17, dadurch gekennzeichnet, daß eine Vorrichtung zur Aufteilung des Führungskanals in zwei strömungstechnisch parallele Teilkanäle wesentlich unterschiedlichen Fördervolumens vorgesehen ist, und daß die wenigstens eine Halbleiter-Doppeldiode in dem Teilkanal mit wesentlich geringeren Fördervolumen angeordnet ist.

**19.** Temperatursensor nach einem der Ansprüche 16 bis 18, dadurch gekennzeichnet, daß die Halbleiter-Doppeldiode so ausgerichtet angeordnet ist, daß ihre beiden Halbleiterdioden in Strömungsrichtung hintereinander liegen, und daß die aus den bei Strömung von den Halbleiterdioden ableitbaren elektrischen Werte als eine Meßgröße für die Strömungsrichtung vorgesehen sind.

**20.** Temperatursensor nach einem der Ansprüche 16 bis 19, dadurch gekennzeichnet, daß mehr als eine Halbleiter-Doppeldiode in Strömungsrichtung nach Art einer Zeile hintereinander liegend, flächenhaft nach Art einer Matrix oder räumlich verteilt vorgesehen sind, und daß die von den einzelnen Halbleiterdioden bei einer Strömung ableitbaren elektrischen Werte für strömungstechnische Parameter als Meßgrößen vorgesehen sind.

**Claims**

**1.** Temperature Sensor consisting of at least two semiconductor diodes which deliver characteristic electrical values, said diodes are pn-junctions on a waver of semiconducting material, characterized in that:

a. at least one of the semiconductor diodes is a luminecence or a laser diode,

b. said semiconductor diodes on said waver of semiconducting material are electrically and geometrically separated from eachother by grooves on said waver of semiconducting material,

c. said semiconductor diodes are placed so on said waver of semiconducting material that their spatial geometric radiation charac-teristic overlaps eachother at least partly,

d. said luminescence or laser diode is provided to steer the electrical characteristic of the other of said diodes by the spatial geometric radiation.

**2.** Temperature Sensor according to claim 1 characterized in that, each of said diodes on said waver which are separated by grooves and placed so that their spatial geometric radiation characteristic overlaps eachother at least partly is a luminescence or laser diode, each of said diodes steer by the spatial geometric radiation the electical characteristic of the other of the related diodes.

**3.** Temperature Sensor according to claim 1 or 2 characterized in that, said waver on which said semiconductor diodes are placed is provided with a integrated circuit or a hybrid circuit and with a contact mean said circuit prepare the electrical values of said diodes to signals which are transfered to the contact mean for further use.

**4.** Temperature Sensor according to claim 3 characterized in that, said waver is oblong the contact mean is attached on one end and said diodes are located on the other end and said integrated or hybrid circuit is located in the middle of it.

5. Temperature Sensor according to claim 1 or 2 characterized in that, there are provided two wavers the one of this wavers is provided with the semiconductor diodes and the other of said wavers is provided with an integrated circuit or a hybrid circuit for preparing the electrical values of said diodes to signals for further use, both wavers are electrically connected by a bundle of lines, preferablxy in the form of a catheter.

6. Temperature Sensor according to one of the previous claims wherein more than one pair of said semiconductor diodes are provided on said waver of semiconducting material characterized in that, the semiconductor diodes are electrically and geometrically separated from eachother by grooves on said waver of semiconducting material the pairs of semiconductor diodes are placed in the form of a row or of a matrix or of a cube to record temperature profils.

7. Temperature Sensor according to one of the previous claims characterized in that, from two neighbouring semiconductor diodes only one of it is provided for the derivation of the electrical signals which correspond to the temperature.

8. Temperature Sensor according to claim 7 characterized in that, one semiconductor diode of a pair of semiconductor diodes is provided for the measurement and/or the compensation of the contact resistance of the other diode of said pair.

9. Temperature Sensor according to claim 7 characterized in that, one of the semiconductor diodes of said pair of semiconductor diodes is provided as a temperature steered optical receiver for the radiation beam of the other semiconductor diode.

10. Temperature Sensor according to claim 9 characterized in that, the receiving semiconducter diode is a photo-diode the area of the pn-junction of it is larger than the area of the pn-junction of the luminescence or laser diode.

11. Temperature Sensor according to one of the previous claims characterized in that, the receiving semiconducter diode which is preferably a photo-diode has a larger reception area in regard of the transmission area of the luminescence or laser diode.

12. Temperature Sensor according to one of the previous claims characterized by a measuring circuit for a pair of semiconducter diodes in which the current through the luminescence or laser diode is much larger than the current through to other diode, difference in the electrical voltage on both diodes is the measure of temperature.

13. Temperature Sensor according to one of the previous claims characterized in that, said pair of semiconductor diodes is provided with an optical output preferably in the form of a LWL.

14. Temperature Sensor according to one of the previous claims characterized in that, the functionality of the sensor is monitored by the light emission from at least one of said diodes.

15. Temperature Sensor according to claim 14 characterized in that, the functionalty of the sensor is checked at short regular intervals during the period of measurement.

16. Temperature Sensor according to one of the previous claims as thermal flow sensor characterized by a conveying channel for the thermal flow, at least one of said semiconductor diodes is located in said channel, the electrical values of said diodes are used as a measure for the thermal flow.

17. Temperature Sensor according to claim 16 characterized in that, the voltage on each of said semiconductore diodes and the difference-voltage between said semiconductor diodes are provided as measure for the thermal flow.

18. Temperature Sensor according to claim 16 or 17 characterized in that, the conveying channel is divided into two parallel conveying channels with different volums of thermal flow, at least one of said semiconductor diodes is located in the conveying channel with the lower volume of thermal flow.

19. Temperature Sensor according to claim 16, 17 or 18 characterized in in that, a pair of said semiconductor diodes is so installed in the conveying channel that both semiconductor diodes are placed behind eachother, the electrical values of said semiconductor diodes are provided as measurement values for the direction of the thermal flow.

20. Temperature Sensor according to claim 16, 17, 18 or 19 characterized in that, more than one pair of semiconductor diodes are placed one behind the other in they conveying channel in the form of a line along the direction of thermal flow or in the form of a matrix or spatial distributed, the electrical values of said semiconductor diodes are provided as measurement values for the thermal flow parameters.

## Revendications

1. Capteur de temperature comportant, pour fournier les valeurs électriques caractéristiques pour la température à déterminer, au moins deux diodes à semiconducteur qui sont réalisées sous forme de jonction pn dans un substrat semiconducteur, remarquable par la totalité des caractéristiques suivantes :

   a) au moins une des deux diodes à semiconducteur est re-alisée sous la forme d'une diode à semiconducteur luminescente ou à activité laser,

   b) les diodes à semiconducteur prévues dans le substrat semiconducteur sont séparées entre elles, électriquement et géométriquement par des creusures,

   c) les diodes à semiconducteur sont disposées de telle sort dans le substrat semiconducteur que leurs caractéristiques, géométriques et spatiales de leurs effets de bord, se superposent au moins partiellement,

   d) la diode à semiconducteur à effet luminescent ou à effet laser et prévue, par rapport à son rayonnement au réglage de sa courbe caractéristique de la diode à semiconducteur qui y est couplée par l'intermédiaire du rayonnement à effet de bord.

2. Capteur de température selon la revendication 1, caractérisé par le fait que deux diodes à semiconducteur voisines, séparées entre elles par des creusures et dont les caractéristiques de rayonnement par effet de bord qui se chevauchent au moins partiellement, sont toutes à effet laser, et que des diodes à semiconducteur voisines sont prévues pour la réglage mutuel des caractéristiques de leur rayonnement par effet de bord.

3. Capteur de température selon la revendication 1 ou 2, caractérisé par le fait que les diodes à semiconduteur sont disposées sur un même substrat qu'elles sont en outre prévues d'un circuit intégré total ou hybride pour l'élaboration des valeurs caractéristiques, prélevées au moins au niveau de l'une des deux diodes, et nécessaires pour déterminer la température, et qu'elles sont pourvues d'un dispositif de branchement pour la transmission des valeurs électriques.

4. Capteur de température selon la revendication 3, caractérise par le fait que le substrat présente une forme allongée, et qu'il est pourvu, à une extrémité, du dispositif de branchement, et, à l'autre extrémité, avec les diodes à semiconducteur, et, de plus, du circuit servant à l'élaboration, et cela, de préferénce dans la zone médiane du substrat.

5. Capteur de température selon la revendication 1 ou 2, caractérise par le fait qu'il est prévu un substrat pourvu de préférence d'un circuit à intégration totale ou hybride pour l'élaboration des valeurs caractéristiques servant à détérminer la température, et prélevées au niveau des diodes à semiconducteur, ainsi qu'un dispositif de branchement pour transmettre des valeurs électriques et par le fait que la diode double constituée par les deux diodes à semiconducteur est en retrait par rapport à la surface du substrat et est reliée au circuit de substrat par l'intermédiaire d'un faisceau de conducteurs, réalisé de préférence sous la forme d'un cathéter.

6. Capteur de température selon l'une des revendications précédentes, caractérisé par le fait qu'il est prévu plusieurs diodes doubles susceptibles d'être couplées par le rayonnement de bord et séparées entre elles par des creusures, et que celles-ci sont disposées suivant une disposition géométrique, à la manière d'une rangée, d'une matrice ou d'une disposition spatiale, de préférence pour la réception de profils de températures.

7. Capteur de température selon l'une des revendications précédentes, caractérisé par le fait que parmi deux diodes à semiconducteur voisines, capable d'être accouplées par un rayonnement de bord, seule l'une d'entre elles est prévue pour prélever une valeur électrique caractéristique pour la température à déterminer.

8. Capteur de température selon la revendication 7, caractérisé par le fait que parmi deux diodes à semiconducteur voisines, susceptibles d'être accouplées par l'intermédiaire d'un rayonnement de bord, l'une des deux diodes à semiconducteur est prévue pour mesurer et/ou pour compenser la resistance de contact de l'autre diode à semiconducteur.

**9.** Capteur de température selon la revendication 7, caractérisé par le fait que la diode à semiconducteur qui sert à dériver une valeur caractéristique pour la température à déterminer est prévue comme capteur optique, fonction de la température, pour le rayonnement de bord provenant de l'autre diode à semiconducteur.

**10.** Capteur de température selon la revendication 9, caractérisé par le fait que la diode à semiconducteur prévue comme récepteur est une photodiode comportant une surface d'arrêt pn supérieure à celle de la diode à semiconducteur à effet luminescent ou à effet laser.

**11.** Capteur de température selon l'une des revendications précédentes, caractérisé par le fait qu'une diode à semiconducteur prévue comme récepteur, de préférence une photodiode, possède une surface de réception pour le rayonnement incident qui est supérieure à celle de la surface lumineuse, qui lui fait front, et qui appartient à la diode à semiconducteur à effet luminescent ou à effet laser.

**12.** Capteur de température selon l'une des revendications précédentes, carac térisé par le fait que le circuit d'exploitation de deux diodes à semiconducteur susceptibles d'être accouplées par le rayonnement de bord, est réalisé de telle manière qu'au moins une des diodes à semiconducteur à effet luminescente ou à effet laser est parcourue par un courant qui est un multiple de celui qui parcourt l'autre diode à semiconducteur, et qu'il est prévu comme mesure de la température, les chutes de tension aux bornes des deux diodes à semiconducteur.

**13.** Capteur de température selon l'une des revendications précédentes, caractérisé par le fait que la sonde-diode à semiconducteur est pourvue d'une sortie optique, de préférence sous la forme d'un guide d'ondes de lumière, qui est découplé de la lumière émise par les diodes à semiconducteur.

**14.** Capteur de température selon l'une des revendications précédentes, caractérisé par le fait qu'il est prévu comme contrôle de la fonction du capteur, l'émission lumineuse d'au moins l'une des deux diodes.

**15.** Capteur de température selon la revendication 14, caractérisé par le fait que le côntrole de la fonction du capteur n'est effectué pour une durée courte, de préférence à répétition périodiquee, et qui est rapportée à la durée de mesure du capteur.

**16.** Capteur de température selon l'une des revendications précédentes, caractérisé par sa réalisation comme débitmètre thermique présentant un canal de passage pour l'écoulement, dans lequel est prévu au moins une double-diode à semiconducteur constituant un capteur de température, et dont les valeurs électriques forment des valeurs pour des paramètres techniques.

**17.** Capteur de température selon la revendication 16, caractérisé par le fait que l'on utilise comme grandeurs de mesure la chute de tension électrique au niveau des deux diodes à semiconducteur et la chute de tension électrique aux bornes des deux diodes à semiconducteur.

**18.** Capteur de température selon la revendications 16 ou 17, caractérisé par le fait qu'il est prévu un dispositif pour subdiviser le canal de passage en deux canaux parallèles ayant des ouvertures de passage notablement différentes et que la double diode à semiconducteur est disposée dans le canal partiel de moindre importance.

**19.** Capteur de température selon les revendications 16 ou 18, caractérisé par le fait que la double diode à semiconducteur est orientée de telle façon que ses deux diodes à semiconducteur se situent l'une derrière l'autre dans la direction de l'ecoulement, les valeurs électriques dérivées des diodes à semiconducteur, lors d'un écoulement, donnant une grandeur de mesure pour le sens de l'ecoulement.

**20.** Capteur de température selon l'une des revendications 16 à 19, caractérisé par le fait que sont prévues plus d'une diode double à semiconducteur, disposées dans la direction de l'ecoulement, en ligne l'une derrière l'autre, suivant une surface avec répartition en matrice, et spatialement réparties, les valeurs électriques derivées, lors d'un écoulement, au niveau des différentes diodes à semiconducteur servant de valeur de mesure pour le paramètre de la technique de l'ecoulement.

EP 0 741 860 B1

14

# Fig.7

# Fig.8

# Fig.9

# Fig.10

# Fig.11

Sperr-Richtg.

Durchl.-Richtg.

$$U = \left[\frac{k}{q} \cdot \ln(m+1)\right] \cdot T$$

$$m = \frac{\text{Fläche 1}}{\text{Fläche 2}}$$

# Fig.12

# Fig.13

Fig.14

K

Tb

Ts    Sr    W

Fig.15

1    4    2

3

DD

Mx

Mx

Fig.16

Sp

Tr

Ts

A